# EUROPÄISCHE PATENTSCHRIFT

(11) **EP 0 892 887 B1**
(45) Veröffentlichungstag und Bekanntmachung des Hinweises auf die Patenterteilung: **13.11.2002**
(21) Anmeldenummer: 98903017.6
(22) Anmeldetag: 20.01.1998
(51) Int. Cl.: F01N 3/28, B01J 35/04, B01D 46/10

(54) **HITZEBESTÄNDIGER UND REGENERIERBARER FILTERKÖRPER MIT STRÖMUNGSWEGEN**
HEAT-RESISTANT AND REGENERABLE FILTER BODY WITH FLOW PATHS
CORPS DE FILTRE A TRAJETS D'ECOULEMENT RESISTANT A LA CHALEUR ET POUVANT ETRE REGENERE

(30) Priorität: 04.02.1997 DE 19704147
(43) Veröffentlichungstag der Anmeldung: 27.01.1999
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP9800292
(87) Internationale Veröffentlichungsnummer: WO98034015

(56) Entgegenhaltungen:
- DE-A- 3 744 265
- US-A- 4 154 568

## Beschreibung

Die vorliegende Erfindung schafft einen Lagenweise aufgebauten Filterkörper zur Zurückhaltung von Partikeln aus einem den Filterkörper durchströmenden Gasstrom mit Strömungswegen für den Gasstrom. Der Filterkörper ist hitzebeständig sowie regenerierbar. Weiterhin wird ein Verfahren zur Herstellung eines hitzebeständigen und regenerierbaren Filterkörpers geschaffen, der zur Zurückhaltung von Partikeln, insbesondere Rußpartikeln aus einem den Filterkörper durchströmenden Gasstrom vorzugsweise einer Verbrennungskraftmaschine dient. Auch der derartig hergestellte Filterkörper weist vorgegebene Strömungswege auf.

Ein bevorzugtes Einsatzgebiet der Erfindung ist die Anwendung auf dem Gebiete der Abgasfilterung bei Verbrennungsmotoren. Das weltweit immer stärker anwachsende Umweltbewußtsein führt dazu, daß insbesondere auf diesem Gebiet Lösungen angestrebt werden, Emissionen zu verringern, zu reinigen, zu neutralisieren und letztendlich auf ein für den Menschen und seine Umwelt niedrigst möglichstes Potential zu senken. Dieses hat Mitte der 80er Jahre beispielsweise bei Kraftwagen das Augenmerk auf Rußpartikel gelenkt. Auch verschiedene Filtermöglichkeiten wurden konstruiert, um diese Partikel aus den Abgasen herausfiltern zu können. Im folgenden wird ein Überblick über einige im Stand der Technik bekannten Filteranlagen gegeben, auf deren Ausgestaltungen, Materialien und Offenbarungsinhalt die Erfindung ebenfalls zurückgreift.

Die DE 37 44 265 offenbart einen Rußfilter zur Abgasreinigung bei Verbrennungsmotoren, der Wellungen und Faltungen zur Umlenkung des Abgases im Rußfilter hat. In die Lagen des Rußfilters ist ebenes Filtermaterial integriert. Weiterhin wird ein Herstellungsverfahren zur Einbringung von Wellungen und Faltungen erläutert, wobei in Abständen quer verlaufende Stege in die verwendeten Stahlbleche eingebracht werden. Aus der DE 33 30 020 ist ein Dieselabgasfilter aus Drahtgewebe bekannt, dessen Siebgewebeanordnung in vielfältigen Formen dargestellt sind. Jeweils offene und geschlossene Stirnflächenabschnitte liegen sich gegenüber, wodurch der Strömungsweg in dem Dieselabgasfilter vorgegeben wird. Die verschlossenen Stirnflächenabschnitte werden mittels Quetschungen von Bestandteilen des Dieselabgasfilters erzielt. Die EP 0 134 002 zeigt dazu mögliche Ausgestaltungen und offenbart ein Herstellungsverfahren, ein Siebgewebe mit einer Decklage zu einem gasdurchlässigen Paket zu wickeln. In einem weiteren Dokument, der DE 29 51 316, wird ein katalytischer Filter für die Dieselabgasreinigung beschrieben, der aus einer metallenen Siebgewebeanordnung mit abwechselnden Lagen aus gewelltem Siebgewebe und geschlossener Decklage besteht. Mittels Abdeckmittel werden die Stirnflächen des Filters so verschlossen, daß ein verschlossener Stirnflächenabschnitt einem offenen Stirnflächenabschnitt gegenüberliegt. Die Filterwirkung dieses katalytischen Filters wird über die Maschenweite sowie über die Porosität einer aufzubringenden Oxidschicht auf das Siebgewebe erzielt. Eine andere technische Ausführung, Strömungswege in einem Filterkörper zu erzielen, wird in der OS 27 33 640 dargestellt. Es wird allerdings eine Trägermatrix für einen katalytischen Reaktor zur Abgasreinigung bei Brennkraftmaschinen mit beschichteten Stahlflächen beschrieben. Erhebungen bzw. Vertiefungen in einem Stahlblech wirken mit einem benachbarten Stahlblech formschlüssig zusammen, wodurch Strömungswege in der Trägermatrix entstehen. Aus der DE 37 44 265 ist wiederum ein Rußfilter bekannt, wobei Lagen aus gewelltem oder gefaltetem Material quer zur Längsrichtung der Welle oder Faltung verschlossen sind.

Neben den soeben beschriebenen, aus metallischen Blechen oder auch Folien hergestellten Filtern gehören ebenfalls extrudierte bzw. keramische Filter zum Stand der Technik. Aus dem G 87 00 787.8 ist ein Rußfilter für Dieselmotoren bekannt, wobei in Wirrlage angeordnete keramische Fasern einen offenporigen Filterkörper ausbilden. In dem Filterkörper ist ein Heizdraht eingebettet, der im wesentlichen das gesamte Volumen des Filterkörpers auf eine Temperatur erwärmen soll. Aus der JP-57-163112 ist ein Rußfilter bekannt, bei dem keramischer Schaum auf beiden Seiten mit Metallfolien umgeben ist. Die Metallfolien sind mit elektrischer Energie aufheizbar. Der keramische Schaum mit den Metallfolien wird zu einem Filterkörper gewunden. Die DE 35 01 182 offenbart einen Abgasfilter für Dieselmotoren, der aus einem monolithischen Filterblock aus poröser Keramik besteht. Dieser Filterblock weist eine Vielzahl von in Hauptströmungsrichtung des Abgases verlaufenden Kanälen auf. Diese sind wechselseitig durch eingebrachte Stopfen verstopft. Die Stopfen sollen dafür sorgen, daß das Abgas mehr als eine Kanalwand in Hintereinanderschaltung durchströmt. Im Durchströmungssinn soll dabei die Porosität der durch die wirkenden Stopfen hintereinandergeschalteten Kanalwände abnehmen. Die Abnahme der Porosität soll durch Aufbringen eines die Porosität verminderndes Mittel auf einem Filterblockrohling erreicht werden, wobei durch mehrfaches Auftragen unterschiedliche Zonen verschiedener Porosität über den so geschaffenen Abgasfilter erzielt werden sollen. Dieser Abgasfilter ist aufgrund der notwendigen Stopfen sowie der unter Umständen mehrmalig notwendigen Wandbeschichtung sehr aufwendig herzustellen. Durch die Aufteilung des monolithischen Filterblockes in Zonen unterschiedlicher Wandbeschichtungsporosität soll ein bei steigender Lebensdauer ansteigender Gegendruck vor dem Filter erheblich reduziert werden. Aufgrund der Durchströmung des Filterblockes, erzwungen durch seinen Aufbau, ist zwar sichergestellt, daß hintereinandergeschaltete Porositätszonen durchströmt werden, eine Aussage über den genauen Strömungsweg ist jedoch nicht möglich. Auch vermischen sich einzelne Gasströme im Filterblock immer wieder miteinander und erreichen aufgrund der dabei auftretenden Effekte einen unerwünschten Druckverlust im Filterblock selbst. Die EP-A-0 717 177 offenbart ein Partikelfilter, der eine zentral-angeordnete Fasermatte aus Keramik aufweist.

Aufgabe der vorliegenden Erfindung ist es, einen Lagenweise aufgebauten hitzebeständigen und regenerierbaren Filterkörper zu schaffen, der eine hohe Filterleistung mit geringen Druckverlusten bei der Filterung und Durchströmung miteinander kombiniert, wobei seine Herstellung in wenigen Arbeitsschritten möglich sein soll. Weiterhin ist es Aufgabe der Erfindung, ein Verfahren zur Herstellung eines hitzebeständigen und regenerierbaren Filterkörpers zu schaffen, das einen besonders arbeitssparenden Aufbau von Filterkörpern ermöglicht.

Diese Aufgaben werden gelöst durch einen Filterkörper mit den Merkmalen des Anspruchs 1 sowie einem Verfahren mit den Merkmalen des Anspruchs 19. Vorteilhafte Ausgestaltungen sind Gegenstand der jeweils abhängigen Ansprüche.

Ein Lagenweise aufgebauter, hitzebeständiger und regenerierbarer Filterkörper zur Zurückhaltung von Partikeln aus einem den Filterkörper in einer Strömungsrichtung durchströmenden Gasstrom mit Strömungswegen zur Aufnahme von Gasteilströmungen weist durch gasundurchlässige Lagen voneinander getrennte Strömungswege auf. In den Strömungswegen sind jeweils in Strömungsrichtung hintereinander mindestens eine erste Filterstufe und eine zweite, feinere Filterstufe angeordnet. Die Separierung der Strömungswege stellt einerseits sicher, daß ein vorgegebener, definierter Weg durch die einzelnen Filterstufen von jedem Gasteilstrom durchschritten wird. Zum anderen werden Druckverluste aufgrund von Vermischungen unterschiedlicher Gasteilströme verhindert. Auch erleichtert die Trennung der einzelnen Strömungswege die konstruktive Ausgestaltung des Füterkörpers. Die jeweiligen Füterstufen in einem Strömungsweg sind dann unabhängig von benachbarten Strömungswegen anordbar.

Die erste Filterstufe hält aus dem durchströmenden Gasstrom Partikel zurück, die eine gewisse Mindestgröße aufweisen. Sie dient daher als Artgrobfilter, welche die größeren flächen- und/oder volumenmäßig vorliegenden Verunreinigungen am Weiterströmen hindert. Der damit zum ersten Mal gefilterte Gasstrom wird dann auf eine zweite, feinere Filterstufe geführt.

Diese ist nun in der Lage, Partikel aus dem Gasstrom zu filtern, die gegenüber denjenigen an der ersten Filterstufe zurückgehaltenen kleiner sind. Die Aufspaltung der Filterung über den Filterkörper in verschiedene Filterstufen hat den Vorteil, daß über eine Filterfläche einer Filterstufe betrachtet, immer genügend Zwischenräume vorhanden sind, durch die noch kleinere als die in dieser Filterstufe herauszufilternden Partikel hindurchströmen können. Wäre nur eine Filterstufe mit einer einzigen vorgegebenen, höchstzulässigen Durchlässigkeit vorhanden, wäre unter Umständen ein viel zu großer Druckverlust bei Anhäufungen von allen herausgefilterten Partikeln festzustellen. Durch Verwendung von Filterstufen, die hintereinander in einem Strömungsweg angeordnet sind, verteilt sich die Belastung mit Partikeln auch über mehrere Filterflächen, wobei die Gesamtbelastung durch Partikel auch noch auf die einzelnen, voneinander getrennten Strömungswege aufgeteilt ist. Entsprechend der Größe der zusammenaddierten Filterflächen der Filterstufen ergibt sich im Betrieb ein geringerer Druckverlust gegenüber einem Filter mit einer einzigen Porosität, sofern die Strömungswege für die zusammenaddierten Filterflächen strömungstechnisch günstig ausgelegt sind.

Bei vielen Anwendungen ist es ausreichend, daß der Filterkörper über zwei Filterstufen verfügt. Abhängig jedoch von dem Einsatzgebiet der Eifindung, der Art der Partikel sowie der Partikelbeladung des Gasstromes ist es unter Umständen günstiger, drei oder mehr Filterstufen mit in Strömungsrichtung abnehmender Größe der Filteröffnungen in dem Filterkörper anzuordnen. Somit gelingt es, sehr fein dosiert den Filterprozeß im Filterkörper durchzuführen. Ist beispielsweise bekannt, daß vorwiegend eine bestimmte Partikelgröße im zu filternden Gasstrom sich befindet, diese Partikelgröße eine gewisse Streuungsbreite bezüglich seiner Abmaße aufweist, wird durch Verwendung mehrerer Filterstufen, die bezüglich ihrer Filteröffnungsgrößen sehr nahe beieinanderliegen, eine Aufteilung des Ausfilterns auf mehrere Filterstufen erzielt. Ein Überlasten einer einzelnen Filterstufe wird so von vornherein ausgeschlossen.

Eine Ausführungsform eines hitzebeständigen und regenerierbaren Filterkörpers weist sich abwechselnde Lagen aus Filtermaterial und Lagen aus gasundurchlässigem Material auf. Die Lagen aus Filtermaterial haben eine in Strömungsrichtung abnehmende Größe an Filteröffnungen, während die Lagen aus gasundurchlässigem Material Strömungsleitflächen bilden. Die Strömungsleitflächen lenken den Gasstrom zwei- oder mehrfach ab, so daß er die Lagen aus Filtermaterial zwei- oder mehrfach kreuzen muß. Während die Strömungsleitflächen zur Ausbildung der Strömungswege und deren gegenseitiger Trennung dienen, bilden die Lagen aus Filtermaterial vorwiegend die jeweiligen Filterstufen aus. Das Filtermaterial kann beispielsweise ein Siebgewebe sein, sowie Tresse oder auch andere bekannte, hitzebeständige Filterstoffe. Diese können beispielsweise Faserfilter oder auch keramische Schaumfilter sein. Ein Beispiel für letztere wären Polyurethanschäume, die mit Filtermaterial (Corderite oder A 1203) getränkt, anschließend getrocknet und dann gebrannt werden. Faserfilter wiederum sind in ihrer Wirkung stark abhängig vom Zusammenspiel der Faserdurchmesser mit dem Partikeldurchmesser. Zur Filterung von Dieselpartikeln bei Kraftfahrzeugabgasen mit einer Partikelgröße zwischen 0,1 bis 1 µm Durchmessr sind Faserdurchmesser von etwa 4 bis 30 µm sehr effektiv. Zur Erzielung einer ausreichenden Standfestigkeit, insbesondere bezüglich der Regenerierbarkeit, können die Faserdurchmesser materialabhängig auch größer gewählt werden. Im übrigen ist auch möglich, Stahlwollefilter einzusetzen, deren Drahtdurchmesser beispielsweise 0,25 mm beträgt. Die Lagen aus Filtermaterial und gasundurchlässigem Material können metallen aber ebenso auch aus keramischem Stoff sein. Beschränkungen der Materialwahl ergeben sich höchstens aufgrund der Bedingungen, unter denen der Filterkörper eingesetzt wird.

Bei einem vorteilhaften Anwendungsgebiet, der Zurückhaltung von Partikeln aus Verbrennungskraftmaschinen, insbesondere von aus Dieselkraftmaschinen stammenden Rußpartikeln, stellt die Temperaturentwicklung bei Regenerierung des Filterkörpers ebenso eine Grenze für Filterkörpermaterialien dar, wie die Temperatur des Gasstromes selbst bei Durchströmen des Filterkörpers. Mit einer katalytischen Nichtedelmetallbeschichtung gelingt es, die Rußzündtemperatur von etwa 500 °C auf etwa 400 °C zu senken. Durch Verwendung metallischer Kraftstoßädditive kann die Zündtemperatur sogar auf bis zu 150 °C gesenkt werden. Zu beachten ist aber, daß beispielsweise im Fahrbetrieb beim Rußabbrand auch Temperaturen unter ungünstigen Bedingungen von 1400 °C und mehr auftreten könnten. Diese werden durch eine erfindungsgemäße Ausgestaltung eines Filterkörpers jedoch verhindert. Bei anderen Anwendungen des Filterkörpers ergibt sich die Begrenztheit der verwendbaren Materialien beispielsweise aufgrund einer notwendigen Säurebeständigkeit, der auftretenden Errosion aufgrund der Art der Partikel sowie deren Strömungsgeschwindigkeit oder anderen Einflußgrößen.

Ebenfalls abhängig von dem Verwendungsgebiet des Filterkörpers sind aber auch die Kosten der konstruktiven Ausgestaltung der Strömungswege. Diese können durch Spalte zwischen Lagen ebenso geschaffen werden wie bei einer Ausführungsform eines Filterkörpers durch voneinanderbeabstandete Wände, beispielsweise verschiedener extrudierter, kreisförmiger Hülsen mit unterschiedlichen Abständen, die ineinandergesteckt einen Filterkörper ergeben. Wird dieser von außen mit dem zu filternden Gasstrom beaufschlagt, kann der gefilterte Gasstrom aus dem inneren der letzten extrudierten Röhre abgeführt werden. Die Hülsen können untereinander verbunden sein, beispielsweise durch Abstützungen. Eine andere Halterungsmöglichkeit dieser Hülsen, die jeweils als Filterstufe wirken, ergibt sich durch Lagerung an ihren Stirnflächen. Diese müssen bei radialer Durchströmung verschlossen werden, um von außen nach innen eines derartigen Filters die Strömungswege auszubilden. Vorteilhafterweise nimmt die Durchlässigkeit der Filterstufen auch in dieser Richtung ab. Diese Durchströmungsrichtung hat den Vorteil, daß an der äußersten Röhre oder Hülse, die natürlich die größte Oberfläche aufweist, auch die größten Partikel abgefangen werden. Aufgrund der Größe der Oberfläche der Hülse führt aber das Zurückhalten der großen Partikel nicht zu so hohen Druckverlusten, wie sie bei beispielsweise der innersten Hülse bei gleicher Gas- und Partikelstrombeaufschlagung auftreten würden. Eine andere Ausgestaltung der Strömungswege sieht diese in Form von Strömungskanälen vor. Dementsprechend kann der Filterkörper gewikkelt, geschichtet, extrudiert oder auf andere Weise hergestellt sein. Als Strömungskanal sind insbesondere Ausführungsformen von Strömungsleitflächen zu betrachten, die einen vom Gasstrom zu durchquerenden Querschnitt bilden und/oder unterteilen, der gegenüber anderen Abmessungen des Filterkörpers kleiner ist.

Die Filterstufen wiederum sind in einer Ausgestaltung aus einzelnen Filtern oder in einer anderen Ausgestaltung auch aus mehreren Filtern als Schichtung gebildet. Eine vorteilhafte Ausbildung eines Filterkörpers weist eine geschichtete und/oder gewickelte Lage mit einer Metallfolie auf, wobei ein erster und/oder zweiter Filter in die Lage eingearbeitet ist. Auf diese Weise läßt sich die Lage beliebig verformen, wobei sie bei einem Filterkörper auch zu dessen Stabilität beitragen kann. Die Integrierung eines oder zweier Filter in einer Lage mit einer Metallfolie erlaubt weiterhin, auch Materialien für das Filter zu verwenden, die von sich aus keine ausreichende Festigkeit bzw. konkrete Formgestalt haben, beispielsweise Schüttungen oder ähnliches. Ein Filter ist dabei einer Filterstufe zugeordnet. Eine weitere Ausgestaltung einer Filterstufe bzw. mehrerer nachfolgender sieht vor, daß das erste und das zweite Filter einen zusammenhängenden Filter ausbilden. Das kann bedeuten, daß das zusammenhängende Filter sich über mehrere Strömungswege erstreckt oder aber auch, daß die in einem Strömungsweg hintereinander angeordneten Filterstufen durch das Filter selbst zusammenhängen. Das Filter kann beispielsweise ein Metallgewebe sein, wobei der Maschenabstand des Gewebes über seine Länge sich verändert und dadurch unterschiedliche Filterstufen ausbildet. Es kommen aber auch andere Filter, wie sie aus dem weiter oben erwähnten Stand der Technik bekannt sind, in Betracht.

Für eine besonders effektive Nutzung einer Filterstufe bzw. eines Filters ist es vorteilhaft, wenn dieser so in einer Ebene in einem Strömungskanal angeordnet ist, daß eine mit zu reinigendem Gas beaufschlagbare Querschnittsfläche der Filterstufe im Strömungskanal größer als die kleinste Querschnittsfläche durch diese Strömungskanal ist. Die Verteilung des Gasstromes über eine größere Fläche bei Durchtritt durch die Filterstufe gegenüber der Querschnittsfläche des Kanals vermeidet zum einen größere Druckverluste, da mehr Öffnungen zum Durchströmen bei einer Filterstufe zur Verfügung gestellt werden. Zum anderen wird das Verstopfen dieser Öffnungen aufgrund der erhöhten Anzahl gegenüber einer senkrecht im Querschnitt angeordneten Filterstufe erschwert. Weiterhin ist auf diese Weise das Filter oder die Filterstufe auch konstruktiv nutzbar. Sie kann insbesondere so angeordnet sein, daß sie einen Beitrag zur Stabilität des Filterkörpers genauso wie zu dessen Elastizität beiträgt. Die Filterstufe ist daher in einer Ausgestaltung eines Filterkörpers unter Belastung verformbar. Diese Verformbarkeit kann plastisch aber genauso auch elastisch sein, je nach dem, mit welchen Belastungen in dem entsprechenden Einsatzgebiet des Filterkörpers zu rechnen ist.

Eine Weiterbildung eines Filterkörpers weist diesen mit einer Filterstufe mit einer Senke auf, an der sich gefilterte Partikel dieser Filterstufe bevorzugt sammeln. Unter dem Begriff Senke ist zum einen eine räumliche Ausgestaltung zu verstehen, bei der aufgrund der Durchströmung durch die Filterstufe eine entsprechende Geometrie derselben eine Wanderbewegung der zurückgehaltenen Partikel an der Filterstufe zuläßt. Die Wanderbewegung kann durch geeignete Konstruktionen der Filterstufe gelenkt werden. Diese kann dazu Vertiefungen, Rillen, Einschnürungen, reusenähnliche Mittel genauso wie Leitflächen haben. Zum anderen sind unter dem Begriff Senke all diejenigen Mittel zu verstehen, die an einer Filterstufe dafür Sorge tragen, daß ein quasi Hauptanziehungspunkt für die zurückgehaltenden Partikel besteht. Diese können chemischer, physikalischer oder elektrischer Art sein.

Die sich bei längerer Durchströmung des Filterkörpers an den Filterstufen ergebenden Anhäufungen von Partikeln in und um die Senke herum erleichtern die Regenerierbarkeit des Filterkörpers. Bei langandauerndem Filterkörpereinsatz nimmt, über die Zeit betrachtet, dessen Filterwirkung ab. Daher muß versucht werden, die ursprüngliche Filterwirkung zumindest annähernd wieder erreichen zu können. Bei einer Ausbildung eines Filterkörpers weist dieser zumindest benachbart zur Senke Mittel zur Regenerierung der Filterstufe auf. Dieses kann ein Mittel zur thermischen Umsetzung der dort angesammelten Partikel sein. Andere Maßnahmen, wie beispielsweise Abflußkanäle für die Partikel oder ähnliches, sind aber ebenfalls möglich. Die Regenerierung des Filterkörpers kann auf chemische, thermische oder auch mechanische Weise erfolgen, wobei die ausgewählte Regenerierungsart im Regelfalle von mehreren Parametern abhängt. Je nach Aufbau des Filterkörpers, der dabei verwendeten Materialien und der Anlage, in der sich der Filterkörper befindet, ist zu entscheiden, ob ein mechanisches Entfernen, beispielsweise Ausschütteln oder Wegschwemmen der Partikel vorteilhafter ist als andere Regenerierungsmöglichkeiten. Die Art der zurückgehaltenen Partikel und ihr Verhalten, z. B. Zusammenbacken o. ä., spielt dementsprechend natürlich auch eine Rolle. Auch kann es vorteilhaft sein, daß verschiedene Filterstufen des Filterkörpers auch unterschiedlich regenerierbar sind. Beispielsweise kann es bei in Strömungsrichtung nachfolgenden Filterstufen günstig sein, die dort besonders feinen Partikel thermisch umzusetzen, während die größeren Partikel an den in Strömungsrichtung vorderen Filterstufen besser mechanisch zu entsorgen wären. Die Auswahl des Regenerierungsverfahrens ist daher auch von energetischen Gesichtspunkten abhängig.

Bei einer bevorzugten Ausgestaltung eines Filterkörpers weist dieser zumindest teilweise eine katalytisch aktive Beschichtung auf. Diese kann zur Umsetzung des durch den Filterkörper durchströmenden Gasstromes dienen, aber ebenso auch eine Funktion für den Filterkörper selbst haben. Dieses kann eine Erwärmung eines Teiles des Filterkörpers oder des gesamten Filterkörpers aufgrund der katalytischen Reaktion sein genauso wie eine ebenfalls mögliche Regenerierung einer Filterstufe. Der Filterkörper ist einsetzbar in chemischen Anlagen genauso wie in abgastechnischen Anlagen, bei denen der Gasstrom so hohe Temperaturen aufweist, daß nicht hitzebeständige Filterkörper geschädigt werden würden.

Für die Anwendung bei Diesel-Kraftfahrzeugen ist es besonders vorteilhaft, zwei unterschiedliche katalytisch aktive Beschichtungen in dem Wabenkörper vorzusehen, um bestimmte Eigenschaften gezielt zu verbessern. So ist die Umsetzung von Stickoxiden im Abgas zu unschädlichen Bestandteilen am effektivsten dann möglich, wenn Kohlenwasserstoffe vorhanden sind, die den vom Stickoxid zu reduzierenden Sauerstoff binden können. Daher wird bevorzugt die erste Stufe des Filterkörpers mit einer die Reduktion fördernden Beschichtung zur Zerlegung von Stickoxiden vorgesehen. Erst danach folgt eine die Oxidation der übriggebliebenen Kohlenwasserstoffe (und von Kohlenmonoxid, falls vorhanden) fördernde Beschichtung.

Gleichzeitig oder alternativ ist es möglich, die verschiedenen Lagen mit unterschiedlichen Beschichtungen zu versehen, insbesondere die gasdurchlässigen Lagen, in denen sich Ruß ansammelt, mit einer die Zündtemperatur des Rußes senkenden katalytisch aktiven Beschichtung und die gasundurchlässigen Lagen mit einer die Oxidation von Kohlenwasserstoffen fördernden Beschichtung.

Bei einer weiteren Ausbildung eines Filterkörpers ist dieser beheizbar. Dieses kann elektrisch aber auch auf andere Weise, z. B. durch chemische Wirkung, Wärmeübertragung oder ähnlichem vollzogen werden. Bevorzugt ist es, wenn die erste und/oder die zweite Filterstufe direkt beheizbar ist. Zum einen ermöglicht dieses, den Gasstrom zu heizen, zum anderen ist auf diese Weise die Filterstufe auch regenerierbar. Die Beheizung des Filterkörpers kann also den gesamten Körper umfassen, genauso aber auch nur gewisse Teile von ihm. Dieses ist durch den Aufbau des Filterkörpers sowie beispielsweise durch die elektrischen Anschlüsse bei einer elektrischen Beheizung steuerbar. Insbesondere kann der Filterkörper so konstruiert sein, daß er Flächen aufweist, die sich besonders stark erhitzen, während andere Fläche demgegenüber nur eine gewisse Erwärmung aufweisen.

Entsprechend einer weiteren Zielsetzung der Erfindung wird ebenfalls ein Verfahren zur Herstellung eines Lagenweise aufgebauten, hitzebeständigen und regenerierbaren Filterkörpers, der zur Zurückhaltung von Partikeln, insbesondere Rußpartikeln aus einem, den Filterkörper durchströmenden Gasstrom, vorzugsweise bei einer Verbrennungskraftmaschine dient, geschaffen. Auch dieser Filterkörper weist durch gasundurchlässige Lagen voneinander getrennte, vorgegebene Strömungswege für den durchströmenden Gasstrom auf. Beim Herstellungsprozeß der Strömungswege im Filterkörper werden gleichzeitig mindestens eine erste Filterstufe und eine zweite, feinere Filterstufe in einem Strömungsweg angeordnet, wobei die erste und die zweite Filterstufe in einer Strömungsrichtung durch den Filterkörper gesehen, auf dem Strömungsweg hintereinander zu liegen kommen. Das derartige Verfahren bietet sich insbesondere für einen Filterkörper mit einer ersten und einer zweiten Filterstufe an, wie er im Vorherigen schon beschrieben wurde. Das Verfahren bietet den Vorteil, daß eine nachträgliche, nach Fertigstellung des Filterkörpers in diesem einzusetzende Filterstufe als Arbeitsschritt entfällt. Dadurch weist das Verfahren nicht nur eine Zeitersparnis gegenüber den bisherigen Verfahren im Stand der Technik, sondern auch Kostenvorteile gegenüber diesen auf. Unter dem Begriff "gleichzeitig" ist daher entsprechend der Erfindung auch der Arbeitsschritt zu verstehen, bei dem ein Strömungsweg gefertigt wird, beispielsweise bei Blechlagen durch Auflegen verschiedener von ihnen oder bei der Wicklung derselben. Handelt es sich um einen extrudierten Körper, kann das Verfahren so durchgeführt werden, daß bei der Extrusion des Filterkörpers seine Porosität durch Änderung oder Auswahl einer Porosität eines Extrusionsmaterials entsprechend einer gewünschten Porosität einer Filterstufe erreicht wird. Dieses kann durch unterschiedliche Abmessungen des oder der verwendeten Extrusionsmaterialien erzielt werden. Bei Schlämmen sind diese beispielsweise jeweils mit unterschiedlicher Porosität angemischt. Sollte ein Filterkörper gesintert sein, besteht hier die Möglichkeit, die Sinterform entsprechend der gewünschten Porosität einer Filterstufe mit unterschiedlichen Sintermaterialgrößen zu befüllen. Entsprechende Vorrichtungen zur Herstellung eines derartigen Filterkörpers weisen vorteilhafterweise Mischapparaturen auf, die eine Änderung von Materialgrößen bei der Herstellung des Filterkörpers erlaubt. Je nach gewünschter Filterstufe kann das Verfahren so ausgelegt werden, daß einerseits ein stetiger Übergang von einer Porosität zur anderen vollzogen wird, andererseits erlaubt das Verfahren auch eine gezielte Abgrenzung zwischen zwei unterschiedlichen Porositäten.

Weitere vorteilhafte Ausgestaltungen und Merkmale der Erfindung werden in der nun folgenden Beschreibung der Zeichnung dargestellt und näher erläutert. Vorteilhafte Weiterbildungen und Kombinationen der Erfindung können aus den bisher beschriebenen und den noch folgenden Merkmalen gebildet werden. Es zeigen:
- Fig. 1: einen Ausschnitt aus einem Filterkörper, der eine erste Filterstufe und eine zweite, feinere Filterstufe hat,
- Fig. 2: einen Ausschnitt aus einem anderen Filterkörper, der eine erste und eine zweite Filterstufe mit jeweils einer Senke aufweist,
- Fig. 3: einen Ausschnitt aus einem Filterkörper, der eine Umlenkung des zu filternden Gasstromes aufweist,
- Fig. 4: einen Filterkörper, dessen Strömungswege radial-axiale Umlenkungen haben,
- Fig. 5: einen weiteren Filterkörper in Explosionsdarstellung,
- Fig. 6: einen Aufbau einer Lage eines Filterkörpers in Explosionsdarstellung,
- Fig. 7: eine Durchströmung eines durch Lagen aufgebauten Filterkörpers im Ausschnitt,
- Fig. 8: einen radial durchströmten Filterkörper in einer Prinzipdarstellung,
- Fig. 9: einen weiteren, radial durchströmbaren Filterkörper, der gewickelt ist,
- Fig. 10: ein Verfahren zur Herstellung eines regenerierbaren und hitzebeständigen Filterkörpers und
- Fig. 11: ein weiteres Verfahren zur Herstellung eines Filterkörpers einer Prinzipskizze.

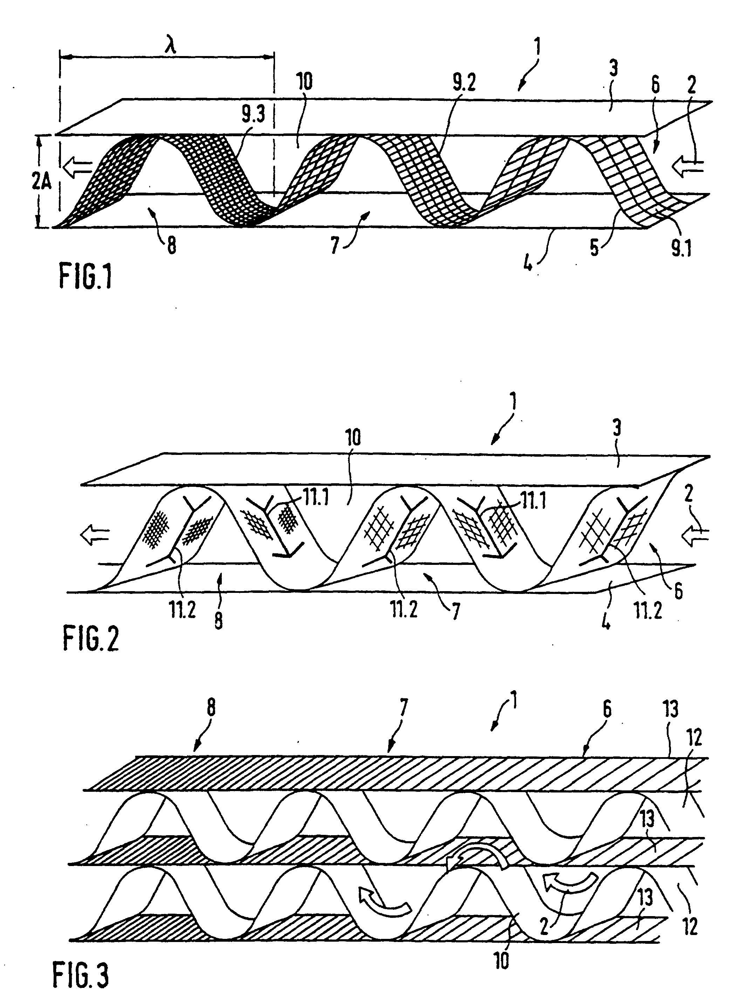

Fig. 1 zeigt einen Ausschnitt aus einem Filterkörper 1, der von einem Gasstrom 2 durchströmt wird. In dem dargestellten Ausschnitt sind eine Oberlage 3, eine Unterlage 4 und dazwischen eine gewellte Lage 5 aus Filtermaterial zu sehen. Die Oberlage 3 sowie die Unterlage 4 sind gasundurchlässig und bilden Strömungsleitflächen aus. Die gewellte Lage 5 ist zwischen den Strömungsleitflächen angeordnet, wobei sie mehrere Filterstufen hat. Die erste Filterstufe 6 weist eine geringere Anzahl von durchströmbaren Öffnungen auf als die nachfolgenden beiden Filterstufen, die zweite Filterstufe 7 und die dritte Filterstufe 8. Die Öffnungen 9 in den jeweiligen Filterstufen 6, 7 und 8 nehmen in Strömungsverlauf des Gasstromes 2 immer kleinere Abmaße an, deren Unterschiede durch unterschiedliche Weiten der Öffnungen 9.1, 9.2 und 9.3 gekennzeichnet sind. Die hintereinander angeordneten Filterstufen 6, 7 und 8 filtern daher auch unterschiedliche Partikelgrößen aus. Das Filtermaterial der gewählten Lage 5 kann Keramik aber genauso auch Metalldraht bzw. Metallgewebe sein. In dem Beispiel der Fig. 1 durchströmt der Gasstrom 2 den zwischen der Oberlage 3 und Unterlage 4 gebildeten Strömungsweg 10 ohne eine durch diese verursachte Ablenkung. Eine gewisse Ablenkung erfolgt allerdings durch die Stege, die die Öffnungen 9.1, 9.2 und 9.3 umgeben. Im Strömungsweg 10 weist die Lage 5 aus Filtermaterial nun eine derartige Wellung auf, daß über deren Wellenlänge λ der Gasstrom 2 zweimal die gewellte Lage 5 durchströmt. Der Abstand λ ist nicht zwingend vorgeschrieben; es sind auch Wellungen mit anderen Abmaßen möglich. Dies betrifft nicht nur die Wellenlänge, sondern ebenfalls deren Amplitude A. Diese kann über den Filterkörper gesehen ab- oder auch zunehmen. Dadurch ergeben sich unterschiedliche Strömungsgeschwindigkeiten im Filterkörper, die je nach Partikelbeladung des Gasstromes 2 vorteilhaft sein können. Die Lage 5 aus Filtermaterial, die die einzelnen Filterstufen 6, 7 und 8 ausbildet, kann auch geknickt, gefaltet oder andere Geometrien annehmen. Der Übergang von einer Filterstufe zur nächsten muß auch nicht so, wie hier dargestellt, im regelmäßigen Abstand der Wellenlänge λ erfolgen. Vielmehr kann der Übergang zwischen der ersten Filterstufe 6 und zweiten Filterstufe 7 fließend sein, je nach Herstellungsprozeß der Lage 5.

Fig. 2 zeigt wiederum einen Ausschnitt eines Filterkörpers 1, der eine erste Filterstufe 6, eine zweite Filterstufe 7 und eine dritte Filterstufe 8 zwischen wiederum einer Oberlage 3 und einer Unterlage 4 angeordnet, aufweist. Die einzelnen Filterstufen 6, 7 und 8 weisen Senken 11 auf. Die Senken 11 sind als Art Vertiefung in den jeweiligen Filterstufen 6, 7 und 8 ausgebildet, wobei in Anströmungsrichtung der jeweiligen Filterstufe die erste Senke 11.1 eine Vertiefung in Richtung der Durchströmung des Gasstromes 2 entlang des Strömungsweges 10 hat und die zweite Senke 11.2 dagegen der Strömung entgegengerichtet ist. Während an der ersten Senke 11.1 sich Partikel in der Mitte sammeln werden, verteilt die zweite Senke 11.2 die ankommenden Partikel zu beiden Seiten. Eine Ausgestaltung entsprechend der ersten Senke 11.1 ist vor allem dann zweckmäßig, wenn die Partikelbeladung des Gasstromes 2 nicht so groß ist, als daß die Sammlung der Partikel an einem einzigen Ort zu zu hohen Druckverlusten führen würde. Bei einer Gefahr der Verstopfung der Filterstufe ist eine Ausgestaltung entsprechend der zweiten Senke 11.2 aufgrund der Verteilung der Partikel vorteilhafter. Auch kann eine Filterstufe mehrere Senken aufweisen.

Fig. 3 zeigt einen Ausschnitt aus einem Filterkörper 1, der erste Lagen 12 aus gasundurchlässigem Material und zweite Lagen 13 aus Filtermaterial hat. Die ersten Lagen 12 sind so ausgebildet, daß der Gasstrom 2 mehrfach abgelenkt wird, wodurch er die zweiten Lagen 13 aus Filtermaterial mehrfach kreuzt. Die zweiten Lagen 13 haben zusammenhängende Filterstufen, die erste Filterstufe 6, die zweite Filterstufe 7 und die dritte Filterstufe 8. Da bei diesem Ausführungsbeispiel die gasundurchlässigen Lagen 12, die die Strömungsleitflächen ausbilden, gewellt sind, dagegen das dazwischenliegende Filtermaterial der zweiten Lagen 13 glatt auf den jeweiligen Wellungen aufliegt, legt der Gasstrom 2 über die Länge des Filterkörpers 1 betrachtet, einen längeren Weg zurück als gegenüber Filterkörpern, wie sie in der Fig. 1 und 2 dargestellt sind. Soll nun der Gasstrom 2 im Filterkörper 1 behandelt werden, sei es thermisch oder katalytisch, kann je nach gewünschten Abmaßen und notwendigem Strömungsweg die günstigste Filterform ausgewählt werden. Entsprechend der Umlenkung in einem Filterkörper 1 gemäß der Fig. 3 ergibt sich außerdem auch eine andere Durchmischung gegenüber derjenigen, die bei den beiden vorher beschriebenen auftritt. Eine weitere Ausgestaltung eines Filterkörpers 1 hat Strömungsleitflächen, die zumindest teilweise zusätzlich weitere Leitflächen aufweisen, die für eine weitere Durchmischung sorgen. Dieses können auch Durchbrüche genauso wie Strukturen sein, wie sie bei Kraftfahrzeugkatalysatoren der Anmelderin bekannt sind. Da der Gasstrom 2 mehrmals durch die zweiten Lagen 13 mit gleichen Filteröffnungen entsprechend der ersten 6, zweiten 7 oder dritten 3 Filterstufe, wie dargestellt, durchströmt, weisen die zweiten Lagen 13 einer weiteren Ausgestaltung zu Beginn einer der jeweiligen Filterstufe zusätzliche Öffnungen auf, die hier allerdings nicht dargestellt sind. Durch diese Öffnungen kann der Gasstrom ungefiltert auf den nachfolgenden Teil der jeweiligen Filterstufe auftreffen. Auf diese Weise wird innerhalb der Filterstufe eine stufenweises Zurückhalten der Partikel erzielt. Die Anzahl dieser Zusatzöffnungen nimmt dazu am zweckmäßigsten über den Strömungsweg 10 gesehen in Strömungsrichtung immer weiter ab. Der letzte Teil einer Filterstufe besitzt dann möglichst keine Zusatzöffnung mehr.

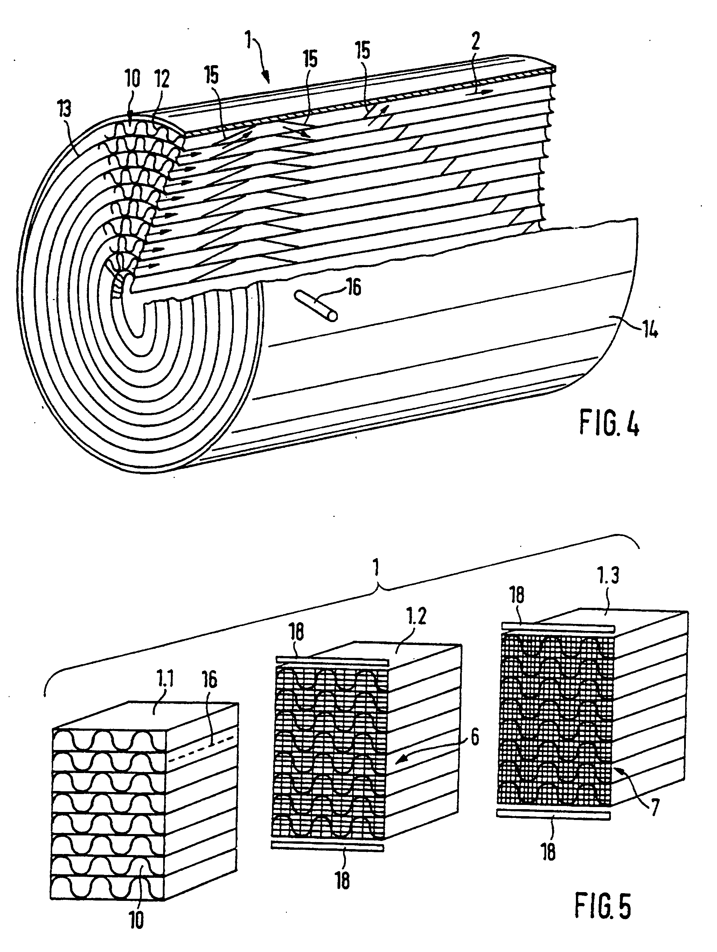

Fig. 4 zeigt einen Filterkörper 1, dessen Strömungswege 10 radial-axiale Umlenkungen aufweisen. Der Filterkörper 1 ist in einem Mantelrohr 14 eingebettet und ist aus gewickelten ersten Lagen 12 aus gasundurchlässigem Material und zweiten Lagen 13 aus Filtermaterial aufgebaut. Die zweiten Lagen 13 aus dem Filtermaterial sind ebenfalls wie im Beispiel der Fig. 3 geradlinig verlaufend. Die gewickelten gasundurchlässigen Lagen 12 dagegen sind zwar gewellt, die Wellung selbst erstreckt sich diesmal jedoch senkrecht zur Durchströmungsrichtung des Gasstromes 2 durch den Filterkörper 1. Die ersten Lagen 12 sind nun so ausgerichtet und ausgeformt, daß sie den jeweiligen Strömungsweg 10 entlang der axialen Achse des Filterkörpers 1 auch radial umlenken können. Diese Umlenkungen 15 können im Filterkörper 1 in ihrer geometrischen Anordnung zueinander parallel oder auch versetzt, wie es in Strömungsrichtung weiter hinten im Filterkörper 1 geschieht, angeordnet sein. Weiterhin hat das Mantelrohr 14 einen elektrischen Anschluß 16, mit dem der gesamte oder auch nur Teile des Filterkörpers 1 an eine elektrische Stromquelle anschließbar sind. Zweckmäßig ist es, den Filterkörper 1 konstruktiv so auszulegen, daß elektrisch leitende Wege innerhalb dieses Körpers festgelegt sind.

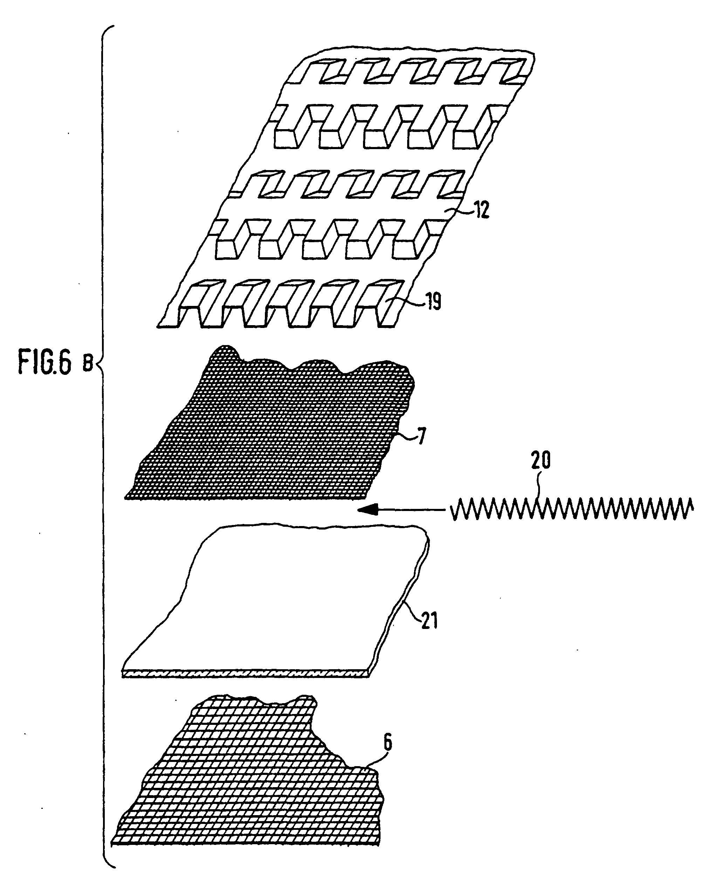

Fig. 5 zeigt einen weiteren Filterkörper 1, diesmal in einer Explosionsdarstellung. Die drei Teile 1.1, 1.2 und 1.3 des Filterkörpers 1 sind extrudiert, gesintert oder auch aus Lagen aufgebaut und ergeben zusammengestellt den Filterkörper 1. In den jeweiligen Teilen 1.1, 1.2 und 1.3 sind als Strömungswege 10 Strömungskanäle 16 vorhanden, die in Teil 1.1 gestrichelt angedeutet sind. Zwischen den jeweiligen Teilen 1.1 und 1.2 bzw. 1.2 und 1.3 sind eine erste Filterstufe 6 bzw. eine zweite Filterstufe 7 angeordnet. Die beiden Filterstufen 6 und 7 können bei diesem mehrteiligen Filterkörper 1 einfach zwischen die Teile 1.1, 1.2 und 1.3 gelegt werden oder auch in entsprechende Befestigungungen an den Teilen 1.1, 1.2 oder 1.3 gehaltert sein. Ein derartiger, mehrstückiger Filterkörper 1 bietet zum einen den Vorteil, daß aufgrund seines modularen Aufbaus er beliebig erweiterbar durch weiteres Anfügen von Teilen und Filterstufen ist. Die Filterstufen 6 und 7 wiederum können relativ problemlos ein- und wieder ausgebaut werden, was einen unter Umständen notwendigen Austausch einer jeweiligen Filterstufe sehr erleichtert. Dieses kann beispielsweise aufgrund von Korrosions- oder Errosionsfolgen an einer Filterstufe notwendig sein. Auch erlaubt diese Anordnung der Filterstufen 6 und 7 zwischen den Teilen 1.1. und 1.2 bzw. 1.2 und 1.3 einen Stromanschluß ohne allzu viele konstruktive Probleme. Ist die Filterstufe 6 oder 7 aus Metall, muß sie nur über geeignete Anschlüsse, angedeutet durch die Stromanschlußleisten 18, mit einer Stromquelle verbunden werden. Je nach Ausgestaltung der Stromanschlußleiste 18 kann es dabei bevorzugte, elektrisch aufheizbare Bestandteile der jeweiligen Filterstufe 6 oder 7 geben. Dieses kann insbesondere eine Senke sein, an der sich die gefilterten Partikel sammeln. Eine elektrische Isolierung gegenüber anderen, elektrisch leitenden Bestandteilen des Filterkörpers 1 erfolgt beispielsweise in den Befestigungen der Filterstufen. Auch muß die Filterstufe nicht durchgängig aus Metall sein. Filterstufen aus gemischten Materialien sind ebenfalls einsetzbar. Weiterhin kann der Filterkörper 1 auch eine katalytische Beschichtung aufweisen, die hier nicht näher dargestellt ist. Diese kann sich durchgängig oder auch nur abschnittsweise bevorzugt auf den die Strömungswege begrenzenden Flächen befinden. Bei einem, wie hier dargestellten, mehrstückigen Filterkörper 1 ist es ebenfalls möglich, verschiedene katalytische Beschichtungen durch jeweils eine Beschichtung in einem Teil 1.1, 1.2 oder 1.3 des Filterkörpers 1 anzuordnen und so in diesem zu vereinigen.

Fig. 6 zeigt beispielhaft den Aufbau B einer Ausgestaltung eines Filterkörpers. Eine gasundurchlässige erste Lage 12 mit Strömungsleitflächen 19 zusammen mit einer ersten Filterstufe 6, daran anliegend eine elektrisch beheizbare Glühvorrichtung 20 sowie eine poröse Isolationsschicht 21, die die Glühvorrichtung 20 von der zweiten Filterstufe 7 elektrisch trennt, bilden einen Aufbau B für einen Strömungsweg in einem Filterkörper. An diesem, in Explosionsdarstellung gezeigten Aufbau B würde sich wieder ein entsprechender Aufbau B anschließen. Dieser kann aber auch anders konstruiert sein. Die dargestellte, erste Lage 12 bildet zusammen mit einer benachbarten nicht dargestellten ersten Lage 12 einen Strömungsweg 10 aus, der von anderen Strömungswegen 10 des Filterkörpers 1 getrennt ist. Jedoch sind die Strömungsleitflächen 19 der ersten Lagen 12 so ausgebildet, daß innerhalb des Strömungsweges 10 durchaus eine Vermischung stattfinden kann. Allerdings ist immer sichergestellt, daß der Gasstrom auf seinem Strömungsweg 10 zuverlässig eine erste Filterstufe 6 sowie eine zweite Filterstufe 7 durchströmt. Die erste 6 und zweite 7 Filterstufe können direkt oder auch mittelbar beheizt werden, wie hier dargestellt durch die Glühvorrichtung 20. Der hier gezeigte Aufbau B hat nur eine Glühvorrichtung 20. Während gröbere Partikel an der ersten Filterstufe 6 zurückgehalten werden, hält die zweite Filterstufe 7 die feineren Partikel zurück. Die Isolationsschicht 21 kann dabei als Puffervolumen dienen, indem die zurückgehaltenen feineren Partikel sich zwischen der ersten 6 und der zweiten 7 Filterstufe dort ansammeln. Da eine Anzahl feiner Partikel eine sehr viel größere Oberfläche gegenüber einer anderen Anzahl gewichtsmäßig gleicher, aber gröberen Partikel zur Verfügung stellt, ist es auch einfacher, die feinen Partikel mittels der Glühvorrichtung 20 zu einer thermischen Reaktion zu bewegen. Daher wird bevorzugt die Glühvorrichtung bei dichter Packung der ersten Filterstufe 6 und zweiten Filterstufe 7 näher zur zweiten Filterstufe 7 angebracht. Bei exothermer Reaktion der feineren Partikel reicht dann die dabei frei werdende Energie aus, auch die durch die erste Filterstufe 6 gröberen Partikel thermisch umzusetzen, ohne daß eine zusätzliche Glühvorrichtung notwendig wäre. Zur Unterstützung einer exothermen Reaktion weist in einer Ausgestaltung die Isolationsschicht 21 daher vorteilhafte Wärmeleitfähigkeiten oder auch katalytische Eigenschaften auf.

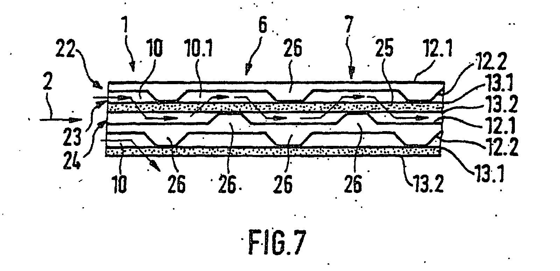

Fig. 7 zeigt im Ausschnitt einen Filterkörper 1, der lagenweise aufgebaut ist. Der Gasstrom 2 strömt auf die erste Stirnfläche 22 des Filterkörpers 1 zu. Dort teilt er sich in unterschiedliche Strömungswege 10 auf. Wie dargestellt, werden dabei eine erste Zuführung 23 und eine zweite Zuführung 24 strömungsmäßig zu einem Strömungsweg 10.1 zusammengeführt. Dieser verbundene Strömungsweg 10.1 ist in seinem weiteren Verlauf durch den Filterkörper 1 von den anderen Strömungswegen 10 getrennt. Der Filterkörper 1 ist, um eine derartige Strömungsführung zu gewährleisten, aus gasundurchlässigen ersten Lagen 12 und gasdurchlässigen zweiten Lagen 13 aufgebaut, die die erste 6 und zweite Filterstufe 7 mitausbilden. Zwischen zwei zweiten Lagen mit Filtermaterial 13.1 und 13.2 ist ein weiteres Material 25 angeordnet. Dieses kann wie in Fig. 6 ein Isolationsmaterial sein, ebenso aber kann es auch ein katalytisch wirkendes Material sein, beispielsweise ein Zeolith. Ebenfalls ist auch eine Auswahl eines Oxidationskatalysators und dortige Anbringung beispielsweise für die Abgasbehandlung bei einem Dieselmotor möglich. Aufgrund einer vorherigen Filterung des partikelbeladenen Gasstromes 2 durch die jeweiligen Filterstufen 6 und 7 besteht für die Wirksamkeit eines Katalysatormaterials 25 keine Beeinträchtigung durch Abdeckung seiner katalytisch wirksamen Schicht mit Partikeln. Diese werden vorher zurückgehalten. Bei dem dargestellten Aufbau eines möglichen Filterkörpers 1 existieren weiterhin Hohlräume 26 zwischen zwei gasundurchlässigen ersten Lagen 12.1 und 12.2. Diese Hohlräume 26 können als Zuführung beispielsweise für elektrische Leiter dienen oder auch als Strömungskanäle für einen anderen Fluidstrom. Wird der Filterkörper 1 beispielsweise bei Temperaturen betrieben, in der eine Kühlung notwendig ist, können die Hohlräume 26 zum Durchfließen eines Kühlfluides genutzt werden. Insbesondere eine senkrecht zur Durchströmung des Gasstromes 2 verlaufende Fluidströmung in den Hohlräumen 26 hat dann aus energetischer Sichtweise Vorteile bei der Wärmeübertragung. Anstatt einer Kühlung kann natürlich auch eine Aufwärmung des Filterkörpers 1 erfolgen, wobei voneinander getrennte Hohlräume 26 auch eine selektive Wärmeübertragung ermöglichen.

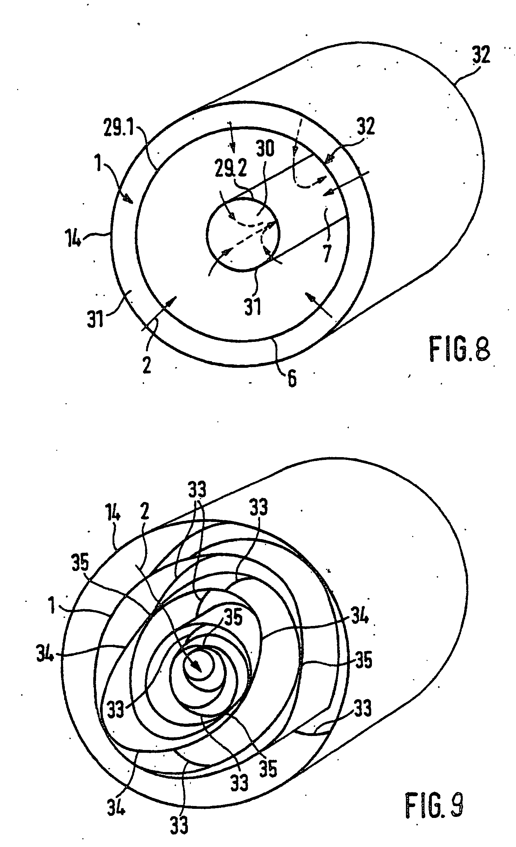

Fig. 8 zeigt in einer Prinzipskizze eine weitere Ausgestaltung eines Filterkörpers 1, der in einem Mantelrohr 14 angeordnet ist. Der Filterkörper 1 wird radial von außen nach innen durchströmt. Dazu weist er in diesem Ausführungsbeispiel Hülsen 29 mit einer nicht näher dargestellten Hülsendicke auf. Der Gasstrom 2 durchströmt die erste Hülse 29.1 und anschließend in dieser Prinzipdarstellung die zweite Hülse 29.2. Die erste Hülse 29.1 sowie die zweite Hülse 29.2 bilden die erste Filterstufe 6 bzw. die zweite Filterstufe 7 aus. Die radiale Durchströmung von außen nach innen hat den Vorteil, daß an der ersten Hülse 29.1 ein größerer Durchmesser und damit eine größere Filterfläche zur Verfügung steht gegenüber derjenigen der zweiten Hülse 29.2. Aus dem Inneren 30 der zweiten Hülse 29.2 wird der Gasstrom 2 aus dem Filterkörper 1 wieder abgeführt. Die Hülsen 29 können jeweils aus unterschiedlichen Materialien gefertigt sein, beispielsweise keramischen oder metallischen Materialien. Auch ist ihre Porosität sowie ihre Dicke je nach Anwendungsfall anpaßbar. Die Hülsen 29 selbst können beispielsweise an ihren Stirnflächen 31 in entsprechenden Halterungen angeordnet werden, so daß in Verbindung mit dem Mantelrohr 14 jeweils geschlossene Stirnflächen 32 des Filterkörpers 1 entstehen. Dieses ermöglicht die Beaufschlagung des Filterkörpers 1 von außen mit dem Gasstrom 2 und dessen Abfuhr aus dem Inneren 30. Natürlich können nicht nur zwei Hülsen 29.1 und 29.2 in einem Mantelrohr 14 angeordnet sein, sondern je nach gewünschter Filterwirkung entsprechend mehr Filterstufen. Die Hülsen 29 können auch aus Lagen aufgebaut sein, wobei mehrere Lagen beispielsweise eine Hülse 29 ergeben. Bei einem radialen Durchströmen des Filterkörpers 1 ergibt sich minimalst ein einziger, vorgegebener Strömungsweg 10. Dieser verläuft von außen nach innen bzw. genau umgekehrt. Er ist durch die Pfeile des Gasstromes 2 angedeutet. Befinden sich beispielsweise Abstützungen zwischen den jeweiligen Hülsen 29, so sind diese zweckmäßigerweise so anzuordnen, daß eine Trennung von Strömungswegen zueinander sichergestellt ist.

Fig. 9 zeigt einen ebenfalls radial durchströmbaren Filterkörper 1, der sich wiederum in einem Mantelrohr 14 befindet. Dieser Filterkörper 1 ist gewickelt, wobei Trennstege 33 zwischen den einzelnen Wicklungen 34 für voneinander getrennte Strömungswege sorgen. Die Wicklungen 34 wiederum sind so ausgebildet, daß sie Berührungspunkte 35 haben. Diese sorgen für eine derartige Unterteilung des Filterkörpers 1, daß der Gasstrom 2 gezwungen wird, eine Wicklung 34 zu durchströmen und damit zwangsläufig eine Filterstufe. Die Berührungspunkte 35 können bei Wicklungen 34 aus metallischen Lagen durch Quetschungen der Lagen entstehen. Ebenfalls in Frage kommen natürlich auch entsprechende Gestaltungen der Matrizen bei Herstellungsprozessen wie Sinterung oder Extrudierung.

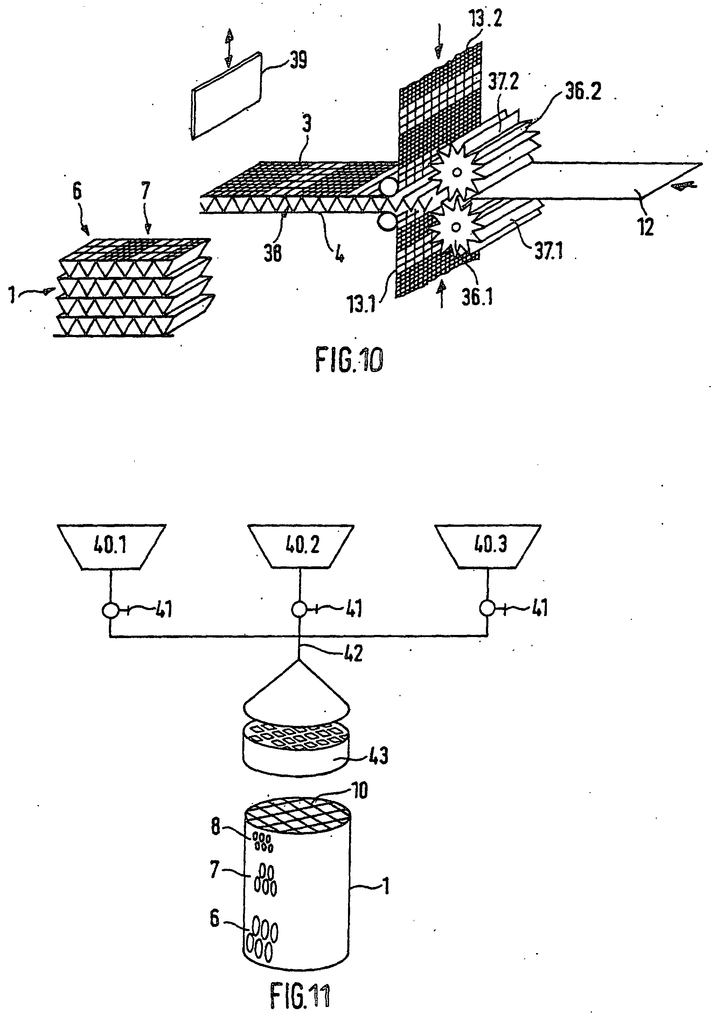

Fig. 10 zeigt nun in einer Prinzipskizze ein Verfahren, wie ein hitzebeständiger und regenerierbarer Filterkörper 1 herstellbar ist. Ein aus Lagen bestehender Filterkörper 1 in Analogie zu einem in der Fig. 3 dargestellten Ausschnitt wird durch Zuführung einer gasundurchlässigen ersten Lage 12 zu zwei ineinander verschränkten Formwalzen 36.1 und 36.2 produziert. Die Formwalzen 36 weisen eine derartige Verzahnung auf, daß die jeweilige Flankengeometrie 37.1 und 37.2 der gasundurchlässigen ersten Lage 12 ein Profil 38 aufprägt. Auf die nun profilierte gasundurchlässige erste Lage 12 wird als Oberlage 3 bzw. Unterlage 4 eine untere zweite Lage 13.1. bzw. obere zweite Lage 13.2 aus Filtermaterial aufgebracht. Die jeweiligen aufeinanderliegenden Lagen können dann anschließend miteinander verbunden werden. Dieses kann mittels Löten, Verschweißen oder anderer Verbindungstechniken geschehen. Durch das gleichzeitige Zuführen von gasundurchlässiger erster Lage 12 und der zweiten Lage 13 aus Filtermaterial wird auch im gleichen Arbeitsschritt die Anordnung einer ersten Filterstufe 6 und einer zweiten, feineren Filterstufe 7 in einem Strömungsweg 10 des so aufgebauten Filterkörpers 1 gewährleistet. Bei dem hier dargestellten Verfahren weisen dazu beide zweiten Lagen 13.1 und 13.2 eine unterschiedliche Porosität über ihren Verlauf auf, die die erste Filterstufe 6 und die zweite Filterstufe 7 im Filterkörper 1 ergeben. Die nun aufeinander geschichteten jeweiligen Lagen 13.1., 12 und 13.2 werden beispielsweise mittels einer Schneidvorrichtung 39 gestückelt und zum Filterkörper 1 anschließend aufgeschichtet. Die verwendeten Lagen 13.1, 13.2 und 12 können schon vor dem Bearbeiten so vorbehandelt sein, daß eine anschließende Nachbehandlung nicht mehr notwendig ist. Dieses betrifft insbesondere katalytische Beschichtungen, Korrosionsschutz oder elektrische wie wärmetechnische Isolierungen. In einer Weiterbildung des dargestellten Verfahrens werden mehrere derartige Vorrichtung benachbart angeordnet, die ein Stapeln der abgeschnittenen Stücke erübrigen. Abgetrennt werden dann komplette Filterkörper 1. Die dargestellte Profilierung der gasundurchlässigen ersten Lage 12 ist weiterhin nicht auf diese beschränkt. Vielmehr ist ebenfalls die zweite Lage 13 aus Filtermaterial zusätzlich oder auch allein profilierbar. Die gewünschte Profilierung ergibt sich dabei entsprechend der Flankengeometrie 37.1 im Zusammenspiel mit der gegenüberliegenden Flankengeometrie 37.2 der beiden Formwalzen 36.1 und 36.2. Diese können auch Einkerbungen aufweisen, wodurch Querstreben innerhalb der ersten und/oder zweiten Lagen entstehen. Neben dem Formwalzen 36.1 und 36.2 sind aber auch andere Profilierungs-Werkzeuge einsetzbar, die einen kontinuierlichen Herstellungsprozeß gewährleisten.

Fig. 11 zeigt ein anderes Verfahren, bei dem im gleichen Arbeitsschritt, in dem die Strömungswege 10 im Filterkörper 1 hergestellt werden, mindestens eine erste Filterstufe 6 und eine zweite, feinere Filterstufe 7 in einem Strömungsweg 10 angeordnet werden. In dieser Prinzipskizze sind ein erster Behälter 40.1, ein zweiter Behälter 40.2 und ein dritter Behälter 40.3 dargestellt. Diese beinhalten jeweils ein Extrusions- oder Sintermaterial unterschiedlicher Porosität. Über Ventile 41 wird der Zustrom des jeweiligen Materials so ausgewählt, daß der zu extrudierende oder zu sinternde Filterkörper 1 entsprechend einer gewünschten Porosität einer seiner Filterstufen 6 oder 7 beim Herstellungsverfahren der Strömungswege 10 in seiner Porosität geändert wird. Über eine gemeinsame Zuleitung 42 für alle Behälter 40.1, 40.2 und 40.3 wird das so mischbare oder auch trennbare Ausgangsmaterial einer Matrize 43 zugeführt, durch die der Aufbau des Filterkörpers 1 mit seinen Strömungswegen 10 festgelegt wird. Der dargestellte. Filterkörper 1 hat nun aufgrund der Auswahl des Extrusionsmaterials bzw. der Mischung derselben jeweils drei unterschiedliche Wandporositäten, die die erste Filterstufe 6, die zweite Filterstufe 7 und die dritte Filterstufe 8 ausbilden. Dazu muß gewährleistet sein, daß der hindurchtretende Gasstrom 2 durch die jeweiligen Wände des Filterkörpers 1 hindurchtritt. Dieses ist beispielsweise durch Verwendung unterschiedlicher Matrizen 43 möglich, die jeweils unterschiedliche Ausgestaltungen haben, so daß der Gasstrom 2 durch die Wände hindurchtreten muß, ohne daß in einem weiteren Arbeitsschritt Kanäle des Filterkörpers 1 verstopft werden müssen. Auch bietet sich dieses Herstellungsverfahren für einen Filterkörper aus Hülsen an. Jede aufzubauende Hülse wird dann bevorzugt nur aus einem Material hergestellt.

Die vorliegende Erfindung schafft einen Lagenweise aufgebauten, hitzebeständigen und regenerierbaren Filterkörpers, der besonders geeignet ist, auch partikelbeladene Gasströme mit unterschiedlicher Größenverteilung der Partikel zu filtern, ohne daß hohe Druckverluste auftreten. Auch bietet dieser Filterkörper aufgrund seines Aufbaus und seiner Fertigung die Möglichkeit, in bisher bekannten Filtersystemen in unveränderter Form gegenüber dort früher verwendeten Filterformen eingesetzt werden zu können. Die schon bestehenden Systeme müssen dafür nicht geändert werden. Das ebenfalls geschaffene Verfahren ermöglicht weiterhin einen derartigen kostengünstigen Filterkörper auch im Einsatz als Massenartikel, ohne den Preis für diese Filterkörper und damit verbundene Filteranlagen unnötig zu verteuern.

### Bezugszeichenliste

- 1: Filterkörper
- 1.1, 1.2, 1.3: Teile des Filterkörpers
- 2: Gasstrom
- 3: Oberlage
- 4: Unterlage
- 5: gewellte Lage aus Filtermaterial
- 6: erste Filterstufe
- 7: zweite Filterstufe
- 8: dritte Filterstufe
- 9,1, 9.2, 9.3: Öffnung in der Filterstufe
- 10: Strömungsweg
- 10.1: verbundener Strömungsweg aus Zuführungen
- 10.2, 10.3: getrennte Strömungswege
- 11: Senke
- 11.1: erste Senke
- 11.2: zweite Senke
- 12, 12.1, 12.2: gasundurchlässige erste Lage
- 13, 13.1, 13.2: zweite Lage aus Filtermaterial
- 14: Mantelrohr
- 15: Umlenkung
- 16: Stromanschluß
- 17: Strömungskanal
- 18: Stromanschlußleiste
- 19: Strömungsleitfläche
- 20: Glühvorrichtung
- 21: Isolationsschicht
- 22: erste Strinfläche
- 23: erste Zuführung
- 24: zweite Zuführung
- 25: Material, z.B Zeolith, Katalysator
- 26: Hohlraum
- 27: Erhebung
- 28: Vertiefung
- 29: Hülse
- 29.1: erste Hülse
- 29.2: zweite Hülse
- 30: Inneres der zweiten Hülse
- 31: Stirnfläche der Hülse
- 32: Stirnfläche des Filterkörpers
- 33: Trennsteg
- 34: Wicklung
- 35: Berührungspunkt
- 36, 36.1, 36.2: Formwalze
- 37.1, 37.2: Flankengeometrie
- 38: Profil
- 39: Schneidvorrichtung
- 40.1, 40.2, 40.3: Behälter
- 41: Ventil
- 42: Zuleitung
- 43: Matrize

- A: Amplitude
- B: Aufbau eines Filterkörpers

- λ: Wellenlänge der gewellten Lage

## Patentansprüche

1. Lagenweise aufgebauter, hitzebeständiger und regenerierbarer Filterkörper (1) zur Zurückhaltung von Partikeln aus einem den Filterkörper (1) in einer Strömungsrichtung durchströmenden Gasstrom (2) mit Strömungswegen (10) zur Aufnahme von Gasteilströmen, wobei in Strömungsrichtung hintereinander mindestens eine erste Filterstufe (6) und eine zweite, feinere Filterstufe (7) angeordnet sind, **dadurch gekennzeichnet, daß** die Strömungswege (10) durch gasundurchlässige Lagen (12) voneinander getrennt sind, und in jedem Strömungsweg (10) die mindestens eine erste (6) und zweite Filterstufe (7) vorgesehen ist.

2. Filterkölper (1) nach Anspruch 1, **dadurch gekennzeichnet, daß** drei oder mehr Filterstufen (6, 7, 8) mit in Strömungsrichtung abnehmender Größe der Filteröffnungen (9.1, 9.2, 9.3) in dem Filterkörper (1) vorhanden sind.

3. Filterkörper (1) nach Anspruch 1 oder 2, **dadurch gekennzeichnet, daß** der Filterkörper (1) aus sich abwechselnden Lagen (5; 13, 13.1, 13.2) aus Filtermaterial und Lagen (3, 4; 12, 12.1, 12.2) aus gasundurchlässigem Material besteht, wobei die Lagen (5; 13, 13.1, 13.2) aus Filtermaterial eine in Strömungsrichtung abnehmende Größe an Filteröffnungen (9.1, 9.2, 9.3) haben und die Lagen (3, 4; 12, 12.1, 12.2) aus gasundurchlässigem Material Strömungsleitflächen (19) bilden, die den Gasstrom (2) zwei- oder mehrfach ablenken, so daß er die Lagen (5; 13, 13.1, 13.2) aus Filtermaterial zwei- oder mehrfach kreuzen muß.

4. Filterkörper (1) nach Anspruch 1,2 oder 3, **dadurch gekennzeichnet, daß** der Filterkörper (1) zur Zurückhaltung von insbesondere Rußpartikeln aus dem Gasstrom (2) einer Verbrennungskraftmaschine einsetzbar ist.

5. Filterkörper (1) nach einem der vorhergehenden Ansprüche, **dadurch gekennzeichnet, daß** der Filterkörper (1) radial durchströmbar ist.

6. Filterkörper (1) nach einem der vorhergehenden Ansprüche, **dadurch gekennzeichnet, daß** der Filterkörper (1) Strömungskanäle (17) aufweist, in denen die erste Filterstufe (6) und die zweite Filterstufe (7) angeordnet sind.

7. Filterkörper (1) nach einem der vorhergehenden Ansprüche, **dadurch gekennzeichnet, daß** der Filterkörper (1) eine geschichtete und/oder gewickelte Lage mit einer Metallfolie aufweist, wobei ein erstes und/oder zweites Filter in die Lage eingearbeitet ist.

8. Filterkörper (1) nach einem der vorhergehenden Ansprüche, **dadurch gekennzeichnet, daß** das erste und das zweite Filter einen zusammenhängenden Filter ausbilden.

9. Filterkörper (1) nach einem der vorhergehenden Ansprüche, **dadurch gekennzeichnet, daß** das Filter oder die Filterstufe so in einer Ebene in einem Strömungskanal angeordnet ist, daß seine mit zu reinigendem Gas beaufschlagbare Querschnittsfläche im Strömungskanal (17) größer als die kleinste Querschnittsfläche durch diesen Strömungskanal (17) ist.

10. Filterkörper (1) nach einem der vorhergehenden Ansprüche, **dadurch gekennzeichnet, daß** die Filterstufe (6, 7, 8) eine Senke (11, 11.1, 11.2) aufweist, an der sich gefilterte Partikel der Filterstufe (6, 7, 8) bevorzugt sammeln.

11. Filterkörper (1) nach einem der vorhergehenden Ansprüche, **dadurch gekennzeichnet, daß** der Filterkörper (1) Mittel zur Regenerierung aufweist.

12. Filterkörper (1) nach Anspruch 10 und 11, **dadurch gekennzeichnet, daß** zumindest benachbart zu der Senke (11) Mittel zur Regenerierung der Filterstufe (6, 7, 8) angeordnet sind, insbesondere Mittel zur thermischen Umsetzung der dort angesammelten Partikel.

13. Filterkörper (1) nach einem der vorhergehenden Ansprüche, **dadurch gekennzeichnet, daß** dieser zumindest teilweise katalytisch beschichtet ist.

14. Filterkörper (1) nach Anspruch 13, **dadurch gekennzeichnet, daß** dieser mindestens zwei unterschiedliche Arten von katalytisch aktiver Beschichtung aufweist.

15. Filterkörper nach Anspruch 14, **dadurch gekennzeichnet, daß** in der ersten Filterstufe (6) eine die Reduktion, insbesondere von Stickoxiden, fördernde katalytisch aktive Beschichtung und in mindestens einer folgenden Filterstufe (7) eine die Oxidation, insbesondere von Kohlenwasserstoffen, fördernde katalytisch aktive Beschichtung vorhanden ist.

16. Filterkörper nach Anspruch 14 oder 15, **dadurch gekennzeichnet, daß** die Lagen aus Filtermaterial (5; 13; 13.1, 13.2) eine andere katalytisch aktive Beschichtung, vorzugsweise eine die Zündtemperatur von Ruß senkende, aufweisen als die aus gasundurchlässigem Material (3, 4; 12, 12.1, 12.2), welche vorzugsweise eine die Oxidation fördernde Beschichtung aufweisen.

17. Filterkörper (1) nach einem der vorhergehenden Ansprüche, **dadurch gekennzeichnet, daß** dieser beheizbar ist.

18. Filterkörper (1) nach Anspruch 17, **dadurch gekennzeichnet, daß** die erste (6) und/oder die zweite Filterstufe (7) direkt beheizbar ist.

19. Verfahren zur Herstellung eines lagenweise aufgebauten, hitzebeständigen und regenerierbaren Filterkörpers (1), der zur Zurückhaltung von Partikeln, insbesondere Rußpartikeln, aus einem den Filterkörper (1) in einer Strömungsrichtung durchströmenden Gasstrom (2) vorzugsweise einer Verbrennungskraftmaschine dient, wobei der Filterkörper (1) in Strömungsrichtung mindestens eine erste Filterstufe (6) und eine zweite, feinere Filterstufe (7) hat, und weiter vorgegebene Strömungswege (10) aufweist, **dadurch gekennzeichnet, daß** beim Herstellungsprozeß der durch gasundurchlässige Lagen (12) voneinander getrennten Strömungswege (10) im Filterkörper (1) gleichzeitig die mindestens eine erste Filterstufe (6) und die zweite, feinere Filterstufe (7) in jedem Strömungsweg (10) angeordnet werden, wobei diese auf dem Strömungsweg (10) hintereinander zu liegen kommen.

20. Verfahren nach Anspruch 19, dadurch gekennnzeichnet, daß ein Filterkörper (1) nach einem der Ansprüche 1 bis 15 mit einer ersten (6) und einer zweiten (7) Filterstufe hergestellt wird.

21. Verfahren nach Anspruch 19 oder 20, **dadurch gekennzeichnet, daß**
- der Filteikörper (1) extrudiert oder gesintert wird,
- wobei seine Porosität durch Auswahl einer Porosität eines Extrusionsoder Sintermaterials aus mehreren Extrusions- oder Sintermaterialien unterschiedlicher Porosität entsprechend einer gewünschten Porosität einer Filterstufe (6,7,8) geändert wird.

## Claims

1. A heat-resistant regeneratable filter body (1) of layer-wise construction for retaining particles from a gas flow (2) which flows through the filter body (1) in a flow direction with flow paths (10) for receiving partial gas flows, wherein at least one first filter stage (6) and a second finer filter stage (7) are arranged in succession in the flow direction, **characterised in that** the flow paths (10) are separated from each other by gas-impermeable layers (12) and the at least one first filter stage (6) and second filter stage (7) are provided in each flow path (10).

2. A filter body (1) according to claim 1 **characterised in that** there are three or more filter stages (6, 7, 8) in the filter body (1), with the size of the filter openings (9.1, 9.2, 9.3) decreasing in the flow direction.

3. A filter body (1) according to claim 1 or claim 2 **characterised in that** the filter body (1) comprises alternate layers (5; 13, 13.1, 13.2) of filter material and layers (3, 4; 12, 12.1, 12.2) of gas-impermeable material, wherein the layers (5; 13, 13.1, 13.2) of filter material have a size of filter openings (9.1, 9.2, 9.3) which decreases in the flow direction and the layers (3, 4; 12, 12.1, 12.2) of gas-impermeable material form flow-guide surfaces (19) which deflect the gas flow (2) two or more times so that it has to cross the layers (5; 13, 13.1, 13.2) of filter material two or more times.

4. A filter body (1) according to claim 1, claim 2 or claim 3 **characterised in that** the filter body (1) can be used for retaining in particular soot particles from the gas flow (2) of an internal combustion engine.

5. A filter body (1) according to one of the preceding claims **characterised in that** the gas can flow radially therethrough.

6. A filter body (1) according to one of the preceding claims **characterised in that** the filter body (1) has flow passages (17) in which the first filter stage (6) and the second filter stage (7) are arranged.

7. A filter body (1) according to one of the preceding claims **characterised in that** the filter body (1) has a stratified and/or wound layer with a metal foil, wherein a first and/or second filter is incorporated into the layer.

8. A filter body (1) according to one of the preceding claims **characterised in that** the first and the second filter form an interconnected filter.

9. A filter body (1) according to one of the preceding claims **characterised in that** the filter or the filter stage is so arranged in a plane in a flow passage that its cross-sectional area which can be acted upon with the gas to be cleaned in the flow passage (17) is larger than the smallest cross-sectional area through said flow passage (17).

10. A filter body (1) according to one of the preceding claims **characterised in that** the filter stage (6, 7, 8) has a depression (11, 11.1, 11.2) at which filtered particles of the filter stage (6, 7, 8) preferably collect.

11. A filter body (1) according to one of the preceding claims **characterised in that** the filter body (1) has regeneration means.

12. A filter body (1) according to claim 10 and claim 11 **characterised in that** means for regeneration of the filter stage (6, 7, 8), in particular means for thermal conversion of the particles collected there, are arranged at least adjacent to the depression (11).

13. A filter body (1) according to one of the preceding claims **characterised in that** it is at least partially catalytically coated.

14. A filter body (1) according to claim 13 **characterised in that** it has at least two different kinds of catalytically active coating.

15. A filter body according to claim 14 **characterised in that** in the first filter stage (6) there is a catalytically active coating for promoting the reduction in particular of nitrogen oxides and provided in at least one following filter stage (7) is a catalytically active coating promoting oxidation in particular of hydrocarbons.

16. A filter body according to claim 14 or claim 15 **characterised in that** the layers of filter material (5; 13; 13.1, 13.2) have a different catalytically active coating, preferably a coating for reducing the ignition temperature of soot, from those of gas-impermeable material (3, 4; 4, 12, 12.1, 12.2) which preferably have an oxidation-promoting coating.

17. A filter body (1) according to one of the preceding claims **characterised in that** it is heatable.

18. A filter body (1) according to claim 17 **characterised in that** the first filter stage (6) and/or the second filter stage (7) is directly heatable.

19. A process for producing a heat-resistant regeneratable filter body (1) of a layer-wise construction which serves to retain particles, in particular soot particles, from a gas flow (2) flowing through the filter body (1) in a flow direction, preferably from an internal combustion engine, wherein the filter body (1) has in the flow direction at least one first filter stage (6) and a second finer filter stage (7) and further predetermined flow paths (10), **characterised in that** in the production process of the flow paths (10) which are separated from each other by gas-impermeable layers (12) in the filter body (1) at the same time the at least one first filter stage (6) and the second finer filter stage (7) are arranged in each flow path (10), wherein they come to lie in succession on the flow path (10).

20. A process according to claim 19 **characterised in that** a filter body (7) is produced in accordance with one of claims 1 to 15 with a first filter stage (6) and a second filter stage (7).

21. A process according to claim 19 or claim 20 **characterised in that**
- the filter body (1) is extruded or sintered,
- wherein its porosity is altered by selecting a porosity of an extrusion or sintering material from a plurality of extrusion or sintering materials of different porosities in accordance with a desired porosity of a filter stage (6, 7, 8).

## Revendications

1. Corps de filtre (1) construit à la manière de couches, résistant à la chaleur et pouvant être régénéré pour retenir des particules d'un flux de gaz (2) parcourant en un sens d'écoulement le corps de filtre (1), comportant des trajets d'écoulement (10) pour recevoir des flux partiels de gaz, dans quel cas au moins une première étape de filtre (6) et une deuxième étape de filtre plus fine (7) sont agencées dans le sens d'écoulement l'une derrière l'autre, **caractérisé en ce que** les trajets d'écoulement (10) sont séparés les uns des autres par des couches (12) imperméables au gaz et que dans chaque trajet d'écoulement (10) l'au moins une première (6) et la deuxième étape de filtre (7) est prévue.

2. Corps de filtre (1) selon la revendication 1, **caractérisé en ce que** dans le corps de filtre (1) se trouvent trois étapes de filtre (6, 7, 8) ou plus avec la taille des orifices de filtre (9.1, 9.2, 9.3) décroissante dans le sens d'écoulement.

3. Corps de filtre (1) selon la revendication 1 ou 2, **caractérisé en ce que** le corps de filtre (1) est constitué de couches alternantes (5 ; 13;13.1, 13.2) de matériau de filtre et de couches (3, 4; 12, 12.1, 12.2) de matériau imperméable au gaz, dans quel cas les couches (5 ; 13, 13.1, 13.2) de matériau de filtre ont une taille des orifices de filtre (9.1, 9.2, 9.3) qui est décroissante dans le sens d'écoulement et les couches (3, 4; 12, 12.1, 12.2) de matériau imperméable au gaz forment des surfaces de guidage d'écoulement (19), qui dévient le flux de gaz (2) deux fois ou plusieurs fois, de sorte qu'il doit croiser deux fois ou plusieurs fois les couches (5 ; 13, 13.1, 13.2) de matériau de filtre.

4. Corps de filtre (1) selon la revendication 1, 2 ou 3, **caractérisé en ce que** le corps de filtre (1) peut être utilisé pour retenir notamment des particules de calamine du flux de gaz (2) d'une machine à combustion interne.

5. Corps de filtre (1) selon l'une des revendications précédentes, **caractérisé en ce que** le corps de filtre (1) peut être parcouru radialement.

6. Corps de filtre (1) selon l'une des revendications précédentes, **caractérisé en ce que** le corps de filtre (1) présente des canaux d'écoulement (17), dans lesquels sont agencées la première étape de filtre (6) et la deuxième étape de filtre (7).

7. Corps de filtre (1) selon l'une des revendications précédentes, **caractérisé en ce que** le corps de filtre (1) présente une couche stratifiée et/ou enroulée avec une feuille métallique, un premier et/ou un deuxième filtre étant incorporé dans la couche.

8. Corps de filtre (1) selon l'une des revendications précédentes, **caractérisé en ce que** le premier et le deuxième filtre forment un filtre interconnecté.

9. Corps de filtre (1) selon l'une des revendications précédentes, **caractérisé en ce que** le filtre ou l'étape de filtre est agencée de telle façon dans un plan dans un canal d'écoulement que son aire de section qui peut être chargée de gaz devant être épuré dans le canal d'écoulement (17), est plus grande que la plus petite aire de section à travers ce canal d'écoulement (17).

10. Corps de filtre (1) selon l'une des revendications précédentes, **caractérisé en ce que** l'étape de filtre (6, 7, 8) présente une dépression (11, 11.1, 11.2) sur laquelle s'amassent de préférence des particules filtrées de l'étape de filtre (6, 7, 8).

11. Corps de filtre (1) selon l'une des revendications précédentes, **caractérisé en ce que** le corps de filtre (1) présente des moyens de régénération.

12. Corps de filtre (1) selon la revendication 10 et 11, **caractérisé en ce qu'**au moins adjacents de la dépression (11) sont agencés des moyens de régénération de l'étape de filtre (6, 7, 8), notamment des moyens pour la transformation thermique des particules y étant amassés.

13. Corps de filtre (1) selon l'une des revendications précédentes, **caractérisé en ce que** celui-ci est au moins partiellement revêtu de manière catalytique.

14. Corps de filtre (1) selon la revendication 13, **caractérisé en ce que** celui-ci présente au moins deux genres différents de revêtement à activité catalytique.

15. Corps de filtre (1) selon la revendication 14, **caractérisé en ce que** dans la première étape de filtre (6) se trouve un revêtement à activité catalytique favorisant la réduction, notamment d'oxydes d'azote et que dans au moins une étape de filtre suivante (7) se trouve un revêtement à activité catalytique favorisant l'oxydation, notamment d'hydrocarbures.

16. Corps de filtre selon la revendication 14 ou 15, **caractérisé en ce que** les couches de matériau de filtre (5 ; 13 ;13.1,13.2) ont un autre revêtement à activité catalytique, de préférence un revêtement baissant la température d'inflammation de calamine que celles de matériau imperméable au gaz (3, 4 ; 12, 12.1, 12.2) qui présentent de préférence un revêtement favorisant l'oxydation.

17. Corps de filtre (1) selon l'une des revendications précédentes, **caractérisé en ce que** celui-ci peut être chauffé

18. Corps de filtre (1) selon la revendication 17, **caractérisé en ce que** la première (6) et/ou la deuxième étape de filtre (7) peut être chauffée directement.

19. Procédé destiné à la fabrication d'un corps de filtre (1) construit à la manière de couches, résistant à la chaleur et pouvant être régénéré qui sert à retenir des particules, notamment des particules de calamine, d'un flux de gaz (2), de préférence d'une machine à combustion interne, le flux de gaz (2) parcourant en un sens d'écoulement le corps de filtre (1), dans quel cas le corps de filtre (1) présente dans le sens d'écoulement au moins une première étape de filtre (6) et une deuxième étape de filtre plus fine (7) et en outre des trajets d'écoulement prédéterminés (10), **caractérisé en ce que** lors du procédé de fabrication des trajets d'écoulement (10), séparés les uns des autres par des couches imperméables au gaz (12) dans le corps de filtre (1) l'au moins une première étape de filtre (6) et la deuxième étape de filtre plus fine (7) sont agencées en même temps dans chaque trajet d'écoulement (10), celles-ci se trouvant situées l'une derrière l'autre sur le trajet d'écoulement.

20. Procédé selon la revendication 19, **caractérisé en ce que** le corps de filtre (1) est fabriqué selon l'une des revendications 1 à 15 avec une première (6) et une deuxième (7) étape de filtre.

21. Procédé selon la revendication 19 ou 20, **caractérisé en ce que**
- le corps de filtre (1) est extrudé ou fritté
- dans quel cas sa porosité est modifiée par le choix d'une porosité d'un matériau d'extrusion ou de frittage de plusieurs matériaux d'extrusion ou de frittage de porosité différente selon une porosité désirée d'une étape de filtre (6, 7, 8).
